# EUROPEAN PATENT SPECIFICATION

(11) **EP 3 691 280 B1**
(45) Date of publication and mention of the grant of the patent: **13.12.2023**
(21) Application number: 18859378.4
(22) Date of filing: 21.08.2018
(51) Int. Cl.: H04N 21/41, H04N 21/4363, H04N 21/2187, H04N 21/4402, G06F 3/01, H04N 21/2343, H04N 21/239, H04N 21/414, H04N 21/442, H04N 21/81, H04N 21/4223

(54) **VIDEO TRANSMISSION METHOD, SERVER, VR PLAYBACK TERMINAL AND COMPUTER-READABLE STORAGE MEDIUM**
VIDEOÜBERTRAGUNGSVERFAHREN, SERVER, VR-WIEDERGABEENDGERÄT UND COMPUTERLESBARES SPEICHERMEDIUM
PROCÉDÉ DE TRANSMISSION VIDÉO, SERVEUR, TERMINAL DE LECTURE VR ET SUPPORT DE STOCKAGE LISIBLE PAR ORDINATEUR

(30) Priority: 25.09.2017 CN 201710874249
(43) Date of publication of application: 05.08.2020
(73) Proprietor: ZTE Corporation, Shenzhen, Guangdong 518057 (CN)
(72) Inventor: HU, Jia, Shenzhen Guangdong 518057 (CN)
(74) Representative: Petraz, Gilberto Luigi
(86) International application number: PCT/CN2018/101574
(87) International publication number: WO 2019/056904

(56) References cited:
- WO-A1-2016/158001
- WO-A1-2017/161276
- CN-A- 105 892 683
- CN-A- 107 024 995
- CN-A- 107 613 338
- KR-A- 20170 081 456
- US-A1- 2014 035 900
- US-A1- 2017 150 230
- US-A1- 2017 272 838
- US-A1- 2018 288 363
- Michael Antonov: "AsynchronousTimewarp Examined", , 3 March 2015 (2015-03-03), pages 1-11, XP055344740, Retrieved from the Internet: URL:https://developer3.oculus.com/blog/asy nchronous-timewarp-examined/ [retrieved on 2017-02-10]
- Vr Industry Forum: "VR Industry Forum: Draft Guidelines", , 12 September 2017 (2017-09-12), XP055529346, Retrieved from the Internet: URL:https://www.vr-if.org/wp-content/uploa ds/VRIF_Draft_Guidelines-v0.0draft10-2017- 09-12.pdf [retrieved on 2018-12-03]

## Description

### Field of the Invention

The present disclosure relates to the technical field of virtual reality, and in particular, to a video transmission method, a server, a VR playback terminal and a computer-readable storage medium.

### Background of the Invention

With the development of various technologies such as computer graphics, human-machine interface technology, multimedia technology, sensing technology and network technology, a computer simulation system for creating and experiencing a virtual world is provided. The simulation system uses a computer to generate a simulation environment, in which fusions of multi-source information are integrated, so as to allow a user to participate in it, and is an interactive system simulation of three-dimensional dynamic scenes and entity behaviors, and enables the user to immerse in the simulation environment. That relates to VR (virtual reality) and AR (augmented reality).

VR technology mainly includes simulation environment, perception, natural skills, a sensing device etc. The simulation environment is a three-dimensional stereoscopic life-like image that is dynamic in real time generated by a computer. Perception refers to that an ideal VR should have all kinds of perception of a person. In addition to visual perception generated by the computer graphics technology, hearing, touch, force and motion are included, and even smell and taste are included. Perception is also referred to as multi-perception. Natural skills refer to that the computer processes data corresponding to actions of a participant, including rotation of a person's head, motions of eyes, gestures, and/or other human behaviors and actions, makes real-time responses to input of the user, and feeds back the responses respectively to five sense organs of the user. The sensing device refers to a three-dimensional interactive device.

AR technology is a technology that seamlessly integrates real world information and virtual world information. AR technology simulates entity information (such as visual information, sound, taste, touch etc.) that is originally difficult to experience within a certain time and space in the real world through science and technology, such as the computer, and superimposes the simulated information. Virtual information is applied to the real world and can be perceived by human senses, thereby achieving a sensory experience beyond reality. Virtual environment and virtual objects are superimposed into the same picture or space in real time to coexist.

At present, VR playback devices are generally immersive virtual reality experience products, mainly including:
a peripheral head-mounted device, which can be externally connected to a personal computer, a smart phone and/or a game console that are used as a computing and storage device, and has an independent screen; an integrated head-mounted device, which has a screen and a computing and storage device, does not need to be externally connected to another device, and can run independently; and a head-mounted mobile terminal device, also known as a glasses box, which can receive a mobile terminal (such as a mobile phone) that functions as the screen and the computing and storage device.

US20170272838A1 disclosed a method for allowing/supporting the usage of a computerized source device within a simulated virtual environment produced by a head mounted device associated with at least one processor.

At present, the VR playback devices mainly have the following problems:
although the VR playback devices can provide private space to the user and protect the user from being disturbed by the outside world, they cannot share VR videos or AR videos viewed by the user to other users in real time; the VR playback devices are all connected to input devices via a cable, and when the user is in motion, the user is easily entangled or tripped by the cable, or the cable is easily pulled out from the input device, which affects usage experience of the user; and heating of the mobile terminal in the head-mounted mobile terminal device causes reduction of a frame rate, which affects the user's viewing experience of the VR videos or the AR videos.

### Summary of the Invention

The scope of the invention is defined by the appended claims. The fifth embodiment is the claimed invention. The technical problem to be solved by the present disclosure is to provide a video transmission method, a server, a VR playback terminal and a computer-readable storage medium, so as to overcome the defect that a VR video and/or an AR video viewed by a user cannot be shared to other users in real time in the existing technology.

The video transmission method, the server, the VR playback terminal and the computer-readable storage medium of the present disclosure achieves wireless transmission of the VR video and/or the AR video between the VR playback terminal and the server, thus effectively avoiding constraints on the user from the cable brought by wired transmission, achieves sharing the VR video and/or the AR video played back by the VR playback terminal to other video playback terminals for playback, thus effectively improving user experience, and performs fine adjustment to the VR video and/or the AR video by means of the GPU in the VR playback terminal, thus effectively improving visual effect of the VR video and/or the AR video.

### Brief Description of the Drawings

Fig. 1 is a flow chart of a video transmission method according to a first embodiment that does not form part of the present invention;
Fig. 2 is a flow chart of a video transmission method according to a second embodiment that does not form part of the present invention;
Fig. 3 is a schematic diagram of a structure of a server according to a third embodiment that does not form part of the present invention;
Fig. 4 is a flow chart of a video transmission method according to a fifth embodiment of the present invention;
Fig. 5 is a schematic diagram of a structure of a VR playback terminal according to a sixth embodiment that does not form part of the present invention;
Fig. 6 is a schematic diagram of receiving, by a server, first position information sent by a VR playback terminal in real time according to an eighth embodiment that does not form part of the present invention;
Fig. 7 is a schematic diagram of acquiring, by the server, the first position information of the VR playback terminal by means of an infrared camera according to the eighth embodiment that does not form part of the present invention;
Fig. 8 is a schematic diagram of acquiring, by the server, the first position information of the VR playback terminal by means of a camera according to the eighth embodiment of the present disclosure; and
Fig. 9 is a schematic diagram of sharing a VR video by a large-screen video playback terminal according to a tenth embodiment that does not form part of the present invention.

### Detailed Description of the Embodiments

In order to further expound technical means used in the present disclosure for achieving the intended purpose and effects thereof, the present disclosure is described in detail below with reference to accompanying drawings and preferred embodiments.

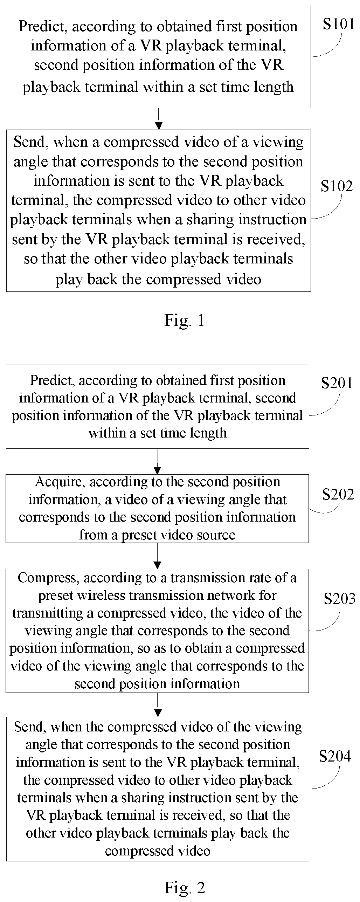

In a first embodiment of the present disclosure, a video transmission method is provided, which is applied to a server. As shown in Fig. 1, the video transmission method includes the following specific steps.

At step S101, second position information of a VR playback terminal within a set time length is predicted according to obtained first position information of the VR playback terminal.

The VR playback terminal is worn on the head of a user, and is for playing back a VR video and/or an AR video.

Optionally, step S 101 includes:
predicting, according to the obtained first position information of the VR playback terminal based on a preset position prediction model, the second position information of the VR playback terminal within the set time length.

The position prediction model is a model which predicts a position of the head of the user within the set time length in the future based on Kalman filtering and/or the measurement data pre-processing technology.

The position prediction model includes, but is not limited to, a stochastic acceleration model based on state estimation of a maneuvering target.

Since head movement of the user is a random process which has a Gauss-Markov characteristic, by predicting the position of the head of the user within the set time length in the future by means of the position prediction model, position data of the head of the user within the set time length in the future can be precisely acquired; delay of the VR video and/or the AR video caused by compression, decompression and/or wireless transmission can be effectively overcome; and playback precision of the VR video and/or the AR video can be effectively improved.

Obtaining the first position information of the virtual reality VR playback terminal includes, but is not limited to:
receiving the first position information sent by the VR playback terminal in real time; or
acquiring infrared information of the VR playback terminal by means of an infrared camera preset around the VR playback terminal and locating the infrared information so as to obtain the first position information of the VR playback terminal, the number of the infrared camera being one or more, the infrared camera being connected with the server via a cable or via a wireless transmission network; or
acquiring image information of the VR playback terminal by means of a camera preset around the VR playback terminal and locating the image information so as to obtain the first position information of the VR playback terminal, the number of the camera being one or more, the camera being connected with the server via a cable or via a wireless transmission network.

At step 102, when a compressed video of a viewing angle that corresponds to the second position information is sent to the VR playback terminal, the compressed video is sent to other video playback terminals when a sharing instruction sent by the VR playback terminal is received, so that the other video playback terminals play back the compressed video.

The other video playback terminals include at least one of the following video playback devices:
devices for playing back the VR video and/or the AR video, including other VR playback devices, a flat display device, a curved display device, a spherical display device and a projection device.

The number of the other video playback terminals is one or more.

Optionally, step S102 includes:
when the compressed video of the viewing angle that corresponds to the second position information is sent to the VR playback terminal via the wireless transmission network, the compressed video is sent to the other video playback terminals when the sharing instruction sent by the VR playback terminal is received, so that the other video playback terminals play back the compressed video.

The compressed video of the viewing angle that corresponds to the second position information is sent to the VR playback terminal via the wireless transmission network in at least one of the following manners:
the compressed video of the viewing angle that corresponds to the second position information is sent to the VR playback terminal according to the DLNA (digital living network alliance) protocol via the wireless transmission network; or
the compressed video of the viewing angle that corresponds to the second position information is sent to the VR playback terminal according to the Miracast protocol via the wireless transmission network; or
the compressed video of the viewing angle that corresponds to the second position information is sent to the VR playback terminal according to the AirPlay protocol via the wireless transmission network; or
the compressed video of the viewing angle that corresponds to the second position information is sent to the VR playback terminal according to the WIDI (Intel wireless display) protocol via the wireless transmission network; or
the compressed video of the viewing angle that corresponds to the second position information is sent to the VR playback terminal according to the IGRS protocol via the wireless transmission network; or
the compressed video of the viewing angle that corresponds to the second position information is sent to the VR playback terminal in a manner of wireless streaming processing via the wireless transmission network.

The AirPlay protocol is a wireless video transmission protocol.

The Miracast protocol is a wireless video transmission protocol.

Manners of sending the compressed video to the other video playback terminals include, but are not limited to, that:
sending the compressed video to the other video playback terminals via the wireless transmission network; or sending the compressed video to the other video playback terminals via a transmission cable.

The video transmission method in the first embodiment of the present disclosure achieves wireless transmission of the VR video and/or the AR video between the VR playback terminal and the server, thus effectively avoiding constraints on the user from the cable brought by wired transmission, and achieves sharing the VR video and/or the AR video played back by the VR playback terminal to the other video playback terminals for playback, thus effectively improving user experience.

In a second embodiment of the present disclosure, a video transmission method is provided, which is applied to a server. As shown in Fig. 2, the video transmission method includes the following specific steps.

At step S201, second position information of a virtual reality VR playback terminal within a set time length is predicted according to obtained first position information of the VR playback terminal.

The VR playback terminal is worn on the head of a user, and is for playing back a VR video and/or an AR video.

Optionally, step S201 includes:
predicting, according to the obtained first position information of the VR playback terminal based on a preset position prediction model, the second position information of the VR playback terminal within the set time length.

The position prediction model is a model which predicts a position of the head of the user within the set time length in the future based on Kalman filtering and/or the measurement data pre-processing technology.

The position prediction model includes, but is not limited to, a stochastic acceleration model based on state estimation of a maneuvering target.

Since head movement of the user is a random process which has a Gauss-Markov characteristic, by predicting the position of the head of the user within the set time length in the future by means of the position prediction model, position data of the head of the user within the set time length in the future can be precisely acquired; delay of the VR video and/or the AR video caused by compression, decompression and/or wireless transmission can be effectively overcome; and playback precision of the VR video and/or the AR video can be effectively improved.

Obtaining the first position information of the virtual reality VR playback terminal includes, but is not limited to:
receiving the first position information sent by the VR playback terminal in real time; or
acquiring infrared information of the VR playback terminal by means of an infrared camera preset around the VR playback terminal and locating the infrared information so as to obtain the first position information of the VR playback terminal, the number of the infrared camera being one or more, the infrared camera being connected with the server via a cable or via a wireless transmission network; or
acquiring image information of the VR playback terminal by means of a camera preset around the VR playback terminal and locating the image information so as to obtain the first position information of the VR playback terminal, the number of the camera being one or more, the camera being connected with the server via a cable or via a wireless transmission network.

At step 202, according to the second position information, a video of a viewing angle that corresponds to the second position information is acquired from a preset video source.

The video of the viewing angle that corresponds to the second position information includes: a VR video of the viewing angle that corresponds to the second position information, and/or an augmented reality AR video of the viewing angle that corresponds to the second position information.

Optionally, step 202 includes:
acquiring a VR video of the viewing angle that corresponds to the second position information from a preset VR video source according to the second position information.

Optionally, step 202 includes:
superimposing set visual information to the video source; and
acquiring the video of the viewing angle that corresponds to the second position information from the preset video source according to the second position information.

Optionally, step 202 includes:
superimposing the set visual information to an AR video source;
acquiring an AR video of the viewing angle that corresponds to the second position information from a preset AR video source according to the second position information.

The AR video source performs video collection by means of a wireless camera or a 360°C full-view collection device.

At step 203, the video of the viewing angle that corresponds to the second position information is compressed according to a transmission rate of a preset wireless transmission network for transmitting a compressed video, so as to obtain a compressed video of the viewing angle that corresponds to the second position information.

At step 204, when the compressed video of the viewing angle that corresponds to the second position information is sent to the VR playback terminal, the compressed video is sent to other video playback terminals when a sharing instruction sent by the VR playback terminal is received, so that the other video playback terminals play back the compressed video.

Optionally, step S204 includes:
when the compressed video of the viewing angle that corresponds to the second position information is sent to the VR playback terminal via the wireless transmission network, the compressed video is sent to the other video playback terminals when the sharing instruction sent by the VR playback terminal is received, so that the other video playback terminals play back the compressed video.

The other video playback terminals include at least one of the following video playback devices:
devices for playing back the VR video and/or the AR video, including other VR playback devices, a flat display device, a curved display device, a spherical display device and a projection device.

The number of the other video playback terminals is one or more.

The compressed video of the viewing angle that corresponds to the second position information is sent to the VR playback terminal via the wireless transmission network in at least one of the following manners:
the compressed video of the viewing angle that corresponds to the second position information is sent to the VR playback terminal according to the DLNA (digital living network alliance) protocol via the wireless transmission network; or
the compressed video of the viewing angle that corresponds to the second position information is sent to the VR playback terminal according to the Miracast protocol via the wireless transmission network; or
the compressed video of the viewing angle that corresponds to the second position information is sent to the VR playback terminal according to the AirPlay protocol via the wireless transmission network; or
the compressed video of the viewing angle that corresponds to the second position information is sent to the VR playback terminal according to the WIDI (Intel wireless display) protocol via the wireless transmission network; or
the compressed video of the viewing angle that corresponds to the second position information is sent to the VR playback terminal according to the IGRS protocol via the wireless transmission network; or
the compressed video of the viewing angle that corresponds to the second position information is sent to the VR playback terminal in a manner of wireless streaming processing via the wireless transmission network.

The AirPlay protocol is a wireless video transmission protocol.

The Miracast protocol is a wireless video transmission protocol.

The video transmission method in the second embodiment of the present disclosure achieves wireless transmission of the VR video and/or the AR video between the VR playback terminal and the server, thus effectively avoiding constraints on the user from the cable brought by wired transmission, and achieves sharing the VR video and/or the AR video played back by the VR playback terminal to the other video playback terminals for playback, thus effectively improving user experience.

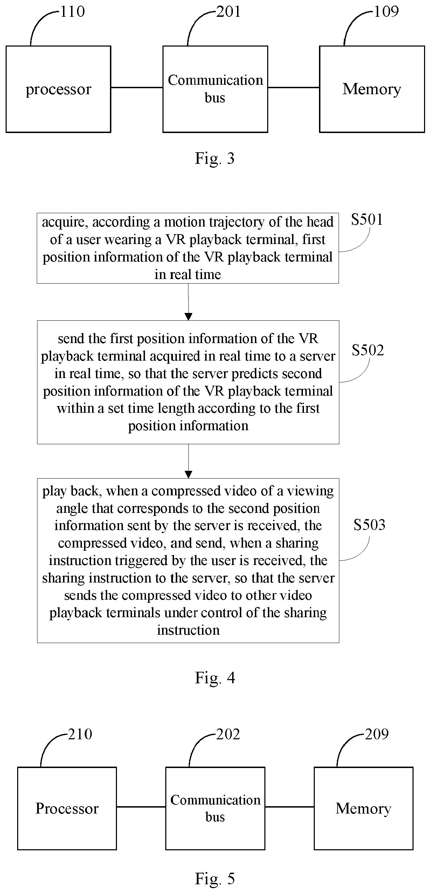

In a third embodiment of the present disclosure, a server is provided. As shown in Fig. 3, the server includes the following components:
a processor 110, a memory 109, and a communication bus 201. In some embodiments of the present disclosure, the communication bus 201 is used for realizing connection communication between the processor 110 and the memory 109.

The processor 110 may be a general-purpose processor, such as a central processing unit (CPU), and may also be a digital signal processor (DSP), an application specific integrated circuit (ASIC), or an integrated circuit which is configured to implement one or more of the embodiments of the present disclosure. The memory 109 is used to store executable instructions of the processor 110.

The memory 109 is used for storing program codes and transmitting the program codes to the processor 110. The memory 109 may include volatile memory, such as random access memory (RAM); the memory 109 may also include non-volatile memory, such as read-only memory (ROM), flash memory, hard disk drive (HDD), or solid-state drive (SSD); and the memory 109 may also include a combination of the above types of memory.

The processor 110 is used for calling program codes for video transmission stored in the memory 109, so as to perform part or all of the steps in the first embodiment of the present disclosure to the second embodiment of the present disclosure.

The server in the third embodiment of the present disclosure achieves wireless transmission of the VR video and/or the AR video between the VR playback terminal and the server, thus effectively avoiding constraints on the user from the cable brought by wired transmission, and achieves sharing the VR video and/or the AR video played back by the VR playback terminal to other video playback terminals for playback, thus effectively improving user experience.

In a fourth embodiment of the present disclosure, a video transmission method is provided, which is applied to a VR playback terminal. The video transmission method includes the following specific step.

At step 401, when a compressed video of a viewing angle that corresponds to the second position information sent by a server is received, the compressed video is played back and a sharing instruction is sent to the server when the sharing instruction triggered by a user is received, so that the server sends the compressed video to other video playback terminals under control of the sharing instruction.

The compressed video of the viewing angle that corresponds to the second position information sent by the server is received in at least one of the following manners:
the compressed video of the viewing angle that corresponds to the second position information sent by the server is received according to the DLNA (digital living network alliance) protocol via the wireless transmission network; or
the compressed video of the viewing angle that corresponds to the second position information sent by the server is received according to the Miracast protocol via the wireless transmission network; or
the compressed video of the viewing angle that corresponds to the second position information sent by the server is received according to the AirPlay protocol via the wireless transmission network; or
the compressed video of the viewing angle that corresponds to the second position information sent by the server is received according to the WIDI (Intel wireless display) protocol via the wireless transmission network; or
the compressed video of the viewing angle that corresponds to the second position information sent by the server is received according to the IGRS protocol via the wireless transmission network; or
the compressed video of the viewing angle that corresponds to the second position information sent by the server is received in a manner of wireless streaming processing via the wireless transmission network.

The other video playback terminals include at least one of the following video playback devices:
devices for playing back the VR video and/or the AR video, including other VR playback devices, a flat display device, a curved display device, a spherical display device and a projection device.

The number of the other video playback terminals is one or more.

The video transmission method in the fourth embodiment of the present disclosure achieves wireless transmission of the VR video and/or the AR video between the VR playback terminal and the server, thus effectively avoiding constraints on the user from the cable brought by wired transmission, and achieves sharing the VR video and/or the AR video played back by the VR playback terminal to the other video playback terminals for playback, thus effectively improving user experience.

In a fifth embodiment of the present disclosure, a video transmission method is provided, which is applied to a VR playback terminal. As shown in Fig. 4, the video transmission method includes the following specific steps.

At S501, first position information of the VR playback terminal is acquired in real time according a motion trajectory of the head of the user wearing the VR playback terminal.

The first position information of the VR playback terminal includes, but is not limited to, information of the motion trajectory of the head of a current user.

At S502, the first position information of the VR playback terminal acquired in real time is sent to a server in real time, so that the server predicts second position information of the VR playback terminal within a set time length according to the first position information.

Optionally, S502 includes:
sending the first position information of the VR playback terminal acquired in real time to the server in real time via a wireless transmission network, so that the server predicts the second position information of the VR playback terminal within the set time length according to the first position information.

At step S503, when a compressed video of a viewing angle that corresponds to the second position information sent by the server is received, the compressed video is played back, and when a sharing instruction triggered by the user is received, the sharing instruction is sent to the server, so that the server sends the compressed video to other video playback terminals under control of the sharing instruction.

The compressed video of the viewing angle that corresponds to the second position information sent by the server is received in at least one of the following manners:
the compressed video of the viewing angle that corresponds to the second position information sent by the server is received according to the DLNA (digital living network alliance) protocol via the wireless transmission network; or
the compressed video of the viewing angle that corresponds to the second position information sent by the server is received according to the Miracast protocol via the wireless transmission network; or
the compressed video of the viewing angle that corresponds to the second position information sent by the server is received according to the AirPlay protocol via the wireless transmission network; or
the compressed video of the viewing angle that corresponds to the second position information sent by the server is received according to the WIDI (Intel wireless display) protocol via the wireless transmission network; or
the compressed video of the viewing angle that corresponds to the second position information sent by the server is received according to the IGRS protocol via the wireless transmission network; or
the compressed video of the viewing angle that corresponds to the second position information sent by the server is received in a manner of wireless streaming processing via the wireless transmission network.

The other video playback terminals include at least one of the following video playback devices:
devices for playing back the VR video and/or the AR video, including other VR playback devices, a flat display device, a curved display device, a spherical display device and a projection device.

The number of the other video playback terminals is one or more.

The compressed video is played back in a first manner or a second manner.

In the first manner, when no GPU (graphics processing unit) is arranged in the VR playback terminal, the compressed video is decompressed so as to obtain a first decompressed video, and the first decompressed video is played back.

In the second manner, when a GPU is arranged in the VR playback terminal, the compressed video is decompressed so as to obtain a second decompressed video;
the second decompressed video is adjusted, according to third position information of the VR playback terminal currently acquired, to a third decompressed video of a viewing angle that corresponds to the third position information by means of the GPU based on a preset viewing angle algorithm; and
the third decompressed video is played back.

The viewing angle algorithm includes, but is not limited to, algorithms including ATW (asynchronous time warp).

The ATW refers to performing processing in a thread (ATW thread), and this thread and a rendering thread operate in parallel (or asynchronously). Before each synchrony, the ATW thread generates a new frame according to the last frame of the rendering thread. In this way, when a current frame is not synchronized, the previous frame may be used for rendering so as to reduce delay.

The video transmission method in the fifth embodiment of the present disclosure achieves wireless transmission of the VR video and/or the AR video between the VR playback terminal and the server, thus effectively avoiding constraints on the user from the cable brought by wired transmission, achieves sharing the VR video and/or the AR video played back by the VR playback terminal to the other video playback terminals for playback, thus effectively improving user experience, and performs fine adjustment to the VR video and/or the AR video by means of the GPU in the VR playback terminal, thus effectively improving visual effect of the VR video and/or the AR video.

In a sixth embodiment of the present disclosure, a VR playback terminal is provided. As shown in Fig. 5, the VR playback terminal includes the following components:
a processor 210, a memory 209, and a communication bus 202. In some embodiments of the present disclosure, the communication bus 201 is used for realizing connection communication between the processor 210 and the memory 209.

The processor 210 may be a general-purpose processor, such as a central processing unit (CPU), and may also be a digital signal processor (DSP), an application specific integrated circuit (ASIC), or an integrated circuit which is configured to implement one or more of the embodiments of the present disclosure. The memory 209 is used to store executable instructions of the processor 210.

The memory 209 is used for storing program codes and transmitting the program codes to the processor 210. The memory 209 may include volatile memory, such as random access memory (RAM); the memory 209 may also include non-volatile memory, such as read-only memory (ROM), flash memory, hard disk drive (HDD), or solid-state drive (SSD); and the memory 209 may also include a combination of the above types of memory.

The processor 210 is used for calling program codes for video transmission stored in the memory 209, so as to perform part or all of the steps in the fourth embodiment of the present disclosure to the fifth embodiment of the present disclosure.

The VR playback terminal in the sixth embodiment of the present disclosure achieves wireless transmission of the VR video and/or the AR video between the VR playback terminal and the server, thus effectively avoiding constraints on the user from the cable brought by wired transmission, achieves sharing the VR video and/or the AR video played back by the VR playback terminal to other video playback terminals for playback, thus effectively improving user experience, and performs fine adjustment to the VR video and/or the AR video by means of the GPU in the VR playback terminal, thus effectively improving visual effect of the VR video and/or the AR video.

In a seventh embodiment of the present disclosure, a computer-readable storage medium is provided.

The computer storage medium may be RAM memory, flash memory, ROM memory, EPROM memory, EEPROM memory, register, hard disk, mobile hard disk, CD-ROM, or any other form of storage medium known in the art.

The computer-readable storage medium stores one or more programs therein, and the one or more programs may be executed by one or more processors, so as to implement part or all of the steps in any embodiment from the first embodiment of the present disclosure to the second embodiment of the present disclosure, or to implement part or all of the steps in any embodiment from the fifth embodiment of the present disclosure to the sixth embodiment of the present disclosure.

The computer-readable storage medium in the seventh embodiment of the present disclosure stores one or more programs therein which may be executed by one or more processors. The computer-readable storage medium achieves wireless transmission of the VR video and/or the AR video between the video playback terminal and the server, thus effectively avoiding constraints on the user from the cable brought by wired transmission, achieves sharing the VR video and/or the AR video played back by the VR playback terminal to the other video playback terminals for playback, thus effectively improving user experience, and performs fine adjustment to the VR video and/or the AR video by means of the GPU in the VR playback terminal, thus effectively improving visual effect of the VR video and/or the AR video.

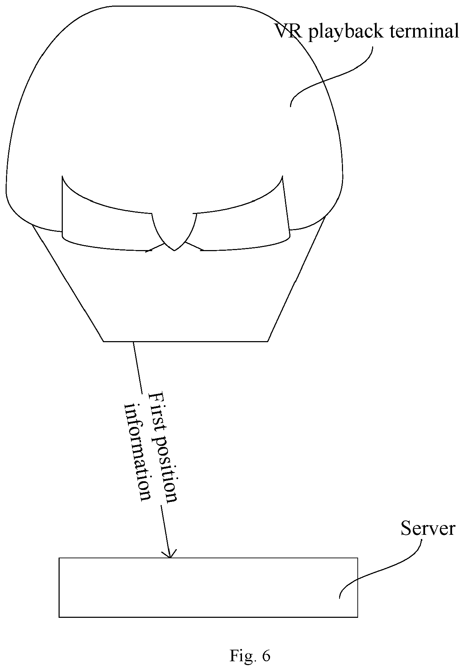

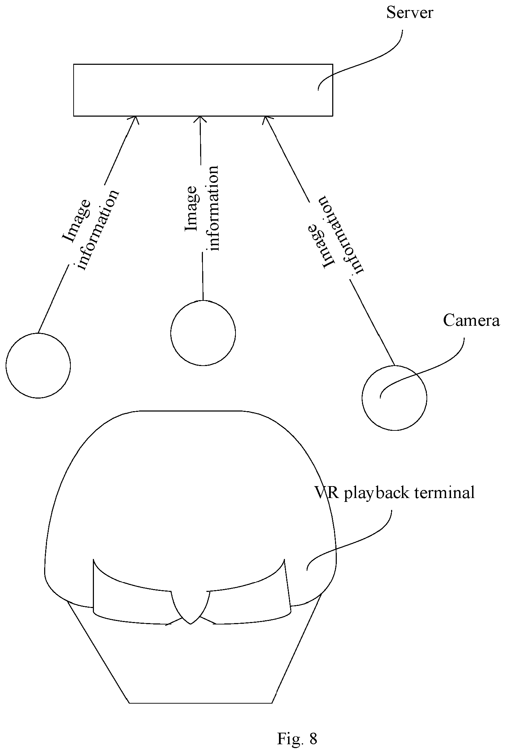

In an eighth embodiment of the present disclosure, a VR video transmission method is taken as an example to introduce an application example of the present embodiment in combination with Figs. 6 to 8 based on the above embodiments.

At step S801, during a multiplayer game, a server acquires first position information of each VR playback terminal.

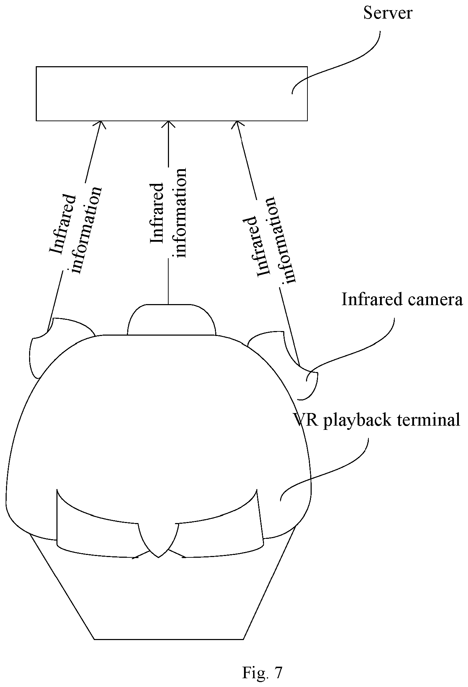

The server acquires the first position information of each VR playback terminal in a manner which includes, but is not limited to, that:
the first position information sent by each VR playback terminal in real time is received via a wireless transmission network, as shown in Fig. 6; or
the first position information of each VR playback terminal is obtained by acquiring infrared information of each VR playback terminal by means of an infrared camera preset around the VR playback terminal and locating and calculating the infrared information, the number of the infrared camera being one or more, the infrared camera being connected with the server via a cable or via a wireless transmission network, as shown in Fig. 7; or
the first position information of each VR playback terminal is obtained by acquiring image information of each VR playback terminal by means of a camera preset around the VR playback terminal and locating and calculating the image information, the number of the camera being one or more, the camera being connected with the server via a cable or via a wireless transmission network.

The number of the video playback terminals is 4, and the video playback terminals include: a first VR payback terminal, a second VR payback terminal, a third VR payback terminal and a fourth VR payback terminal.

At step S802, the server superimposes the second VR payback terminal, the third VR payback terminal and the fourth VR payback terminal with a current game scene, and predicts second position information X of the first VR payback terminal at a certain time point t+Δt according to first position information x of the first VR payback terminal at a current time t; and Δt=compression time + network transmission time + decompression time.

At step S803, the server uses the second position information X as input to generate a VR video that corresponds to a position of the first VR payback terminal.

At step S804, after the server compresses the VR video that corresponds to the position of the first VR payback terminal, a compressed VR video is streamed to the first VR payback terminal via Wi-Fi (wireless-fidelity).

At step S805, the first VR payback terminal acquires a current real-time position of the head of a user corresponding to the first VR payback terminal, uses an ATW algorithm to perform fine adjustment to the compressed VR video by means of a GPU preset in the first VR playback terminal, and plays back a VR video that is adjusted to the current real-time position of the head of the user corresponding to the first VR payback terminal.

At step 806, when the first VR playback terminal receives a sharing instruction of sharing the VR video to the second VR payback terminal, the third VR payback terminal and the fourth VR payback terminal sent by the user, the first VR playback terminal sends the sharing instruction to the server, and the server sends a VR video of the current real-time position of the head of the user corresponding to the first VR payback terminal to the second VR payback terminal, the third VR payback terminal and the fourth VR payback terminal under control of the sharing instruction, so that the second VR payback terminal, the third VR payback terminal and the fourth VR payback terminal play back the VR video; or
when the second VR playback terminal receives a sharing instruction of sharing a VR video of the current real-time position of the head of the user corresponding to the first VR payback terminal, the second VR playback terminal sends the sharing instruction to the server, and the server sends the VR video of the current real-time position of the head of the user corresponding to the first VR payback terminal to the second VR payback terminal, so that the second VR payback terminal plays back the VR video.

The first VR playback terminal and the second VR playback terminal may be connected with the server via the same wireless local area network, or may be connected with the server via different wireless local area networks.

The VR video transmission method in the eighth embodiment of the present disclosure achieves wireless transmission of the VR video between the VR playback terminal and the server, thus effectively avoiding constraints on the user from the cable brought by wired transmission, achieves sharing the VR video played back by the VR playback terminal to other video playback terminals for playback, thus effectively improving user experience; and performs fine adjustment to the VR video by means of the GPU in the VR playback terminal, thus effectively improving visual effect of the VR video.

In a ninth embodiment of the present disclosure, an AR video transmission method is taken as an example to introduce an application example of the present embodiment based on the above embodiments.

At step S901, a server acquires first position information of a VR playback terminal.

The server acquires the first position information of each VR playback terminal in a manner which includes, but is not limited to, that:
the first position information sent by each VR playback terminal in real time is received via a wireless transmission network; or
the first position information of each VR playback terminal is obtained by acquiring infrared information of each VR playback terminal by means of an infrared camera preset around the VR playback terminal and locating and calculating the infrared information, the number of the infrared camera being one or more, the infrared camera being connected with the server via a cable or via a wireless transmission network; or
the first position information of each VR playback terminal is obtained by acquiring image information of each VR playback terminal by means of a camera preset around the VR playback terminal and locating and calculating the image information, the number of the camera being one or more, the camera being connected with the server via a cable or via a wireless transmission network.

At step S902, the server generates an AR video of a real scene based on a video acquired by one or more preset wireless cameras.

At step S903, the server identifies one or more set objects in the AR video of the real scene, and performs image processing to the set objects.

For example, the server identifies one or more set characters in the AR video of the real scene, and put on virtual clothes for the set characters.

At step S904, the server predicts second position information X of the first VR payback terminal at a certain time point t+Δt in the future according to first position information x of the VR payback terminal at a current time t; and Δt=compression time + network transmission time + decompression time.

At step S905, the server uses the second position information X as input to generate an AR video that corresponds to a position of the VR payback terminal, and superimposes one or more set image to the AR video.

At step S906, after the server compresses the AR video, a compressed AR video is streamed to the VR payback terminal via Wi-Fi.

At step S907, the VR payback terminal decompresses the compressed AR video.

At step S908, the VR payback terminal acquires a current real-time position of the head of the user corresponding to the VR payback terminal, uses an ATW algorithm to perform fine adjustment to the compressed AR video by means of a GPU preset in the VR playback terminal, and plays back an AR video that is adjusted to the current real-time position of the head of the user corresponding to the VR payback terminal.

When no GPU is preset in the VR payback terminal, a decompressed AR video is played back.

At step S909, when the VR playback terminal receives a sharing instruction sent by the user, the VR playback terminal sends the sharing instruction to the server, and the server sends the AR video streamed to the VR playback terminal to other VR payback terminals under control of the sharing instruction, so that the other VR payback terminals play back the AR video.

The VR playback terminal and the other VR playback terminals may be connected with the server via the same wireless local area network, or may be connected with the server via different wireless local area networks.

The AR video transmission method in the ninth embodiment of the present disclosure achieves wireless transmission of the AR video between the VR playback terminal and the server, thus effectively avoiding constraints on the user from the cable brought by wired transmission, achieves sharing the AR video played back by the VR playback terminal to other video playback terminals for playback, thus effectively improving user experience; and performs fine adjustment to the AR video by means of the GPU in the VR playback terminal, thus effectively improving visual effect of the AR video.

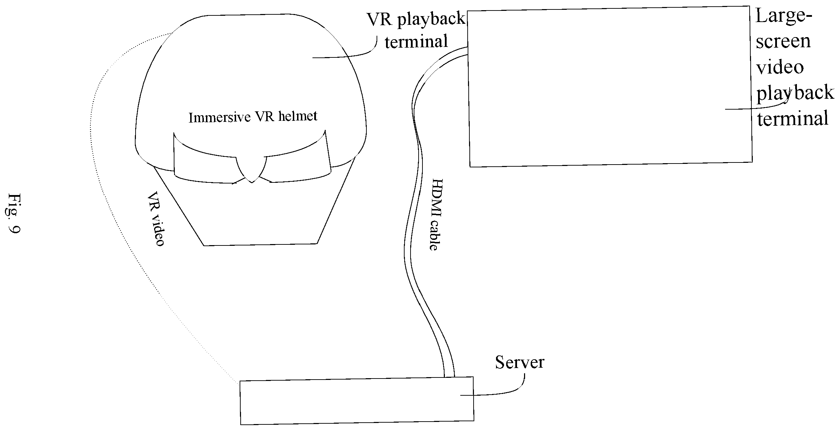

In a tenth embodiment of the present disclosure, a VR video transmission method is taken as an example to introduce an application example of the present embodiment based on the above embodiments, as shown in Fig. 9.

At step S 1001, during a game, a server acquires first position information of a VR playback terminal.

The server acquires the first position information of the VR playback terminal in a manner which includes, but is not limited to, that:
the first position information sent by the VR playback terminal in real time is received via a wireless transmission network; or
the first position information of the VR playback terminal is obtained by acquiring infrared information of the VR playback terminal by means of an infrared camera preset around the VR playback terminal and locating and calculating the infrared information, the number of the infrared camera being one or more, the infrared camera being connected with the server via a cable or via a wireless transmission network; or
the first position information of the VR playback terminal is obtained by acquiring image information of the VR playback terminal by means of a camera preset around the VR playback terminal and locating and calculating the image information, the number of the camera being one or more, the camera being connected with the server via a cable or via a wireless transmission network.

At step S1002, the server predicts second position information X of the VR payback terminal at a certain time point t+Δt in the future according to first position information x of the VR payback terminal at a current time t; and Δt=compression time + network transmission time + decompression time.

At step S1003, the server uses the second position information X as input to generate a VR video that corresponds to a position of the VR payback terminal.

At step S1004, after the server compresses the VR video of the position of the VR payback terminal, a compressed VR video is streamed to the VR payback terminal via Wi-Fi.

At step S1005, the VR payback terminal decompresses the compressed VR video.

At step S 1006, the VR payback terminal acquires a current real-time position of the head of the user corresponding to the VR payback terminal, uses an ATW algorithm to perform fine adjustment to the compressed VR video by means of a GPU preset in the VR playback terminal, and plays back a VR video that is adjusted to the current real-time position of the head of the user corresponding to the VR payback terminal.

At step S 1007, when the VR playback terminal receives a sharing instruction sent by the user, the VR playback terminal sends the sharing instruction to the server, and the server sends the VR video streamed to the VR payback terminal to a large-screen video playback terminal under control of the sharing instruction, so that the large-screen video playback terminal plays back the VR video, as shown in Fig. 9.

The large-screen video playback terminal is connected with the server via a HDMI (high definition multimedia interface) cable.

Connecting with the server via the HDMI cable can greatly shorten video transmission delay.

The VR video transmission method in the tenth embodiment of the present disclosure achieves wireless transmission of the VR video between the VR playback terminal and the server, thus effectively avoiding constraints on the user from the cable brought by wired transmission, achieves sharing the VR video played back by the VR playback terminal to other video playback terminals for playback, thus effectively improving user experience; and performs fine adjustment to the VR video by means of the GPU in the VR playback terminal, thus effectively improving visual effect of the VR video.

Through the description of the specific embodiments, the technical means used in the present disclosure for achieving the intended purpose and effects thereof can be understood more deeply and specifically. However, the accompanying drawings are only for providing reference and description, rather than restricting the present disclosure.

### Industrial Applicability

The present disclosure relates to the technical field of virtual reality. The technical solution of the present disclosure achieves wireless transmission of the VR video and/or the AR video between the VR playback terminal and the server, thus effectively avoiding constraints on the user from the cable brought by wired transmission, achieves sharing the VR video and/or the AR video played back by the VR playback terminal to other video playback terminals for playback, thus effectively improving user experience, and performs fine adjustment to the VR video and/or the AR video by means of the GPU in the VR playback terminal, thus effectively improving visual effect of the VR video and/or the AR video.

## Claims

1. A video transmission method, applied to a VR playback terminal, the method comprising:
playing back (503), when a compressed video of a viewing angle that corresponds to a second position information sent by a server is received, the compressed video, and sending, when a sharing instruction triggered by a user is received, the sharing instruction to the server, so that the server sends the compressed video to other video playback terminals under control of the sharing instruction;
wherein playing back the compressed video comprises:
decompressing, when a GPU is arranged in the VR playback terminal, the compressed video so as to obtain a second decompressed video;
adjusting, according to third position information of the VR playback terminal currently acquired, the second decompressed video to a third decompressed video of a viewing angle that corresponds to the third position information by means of the GPU based on a preset viewing angle algorithm; and
playing back the third decompressed video.

2. The method according to claim 1, wherein before receiving the compressed video of the viewing angle that corresponds to the second position information sent by the server, the method further comprises:
sending (502) first position information of the VR playback terminal acquired in real time to the server in real time, so that the server predicts the second position information of the VR terminal within a set time length according to the first position information.

3. The method according to claim 2, wherein before sending the first position information of the VR playback terminal acquired in real time to the server in real time, the method further comprises:
acquiring (501) the first position information of the VR playback terminal in real time according a motion trajectory of the head of the user wearing the VR playback terminal.

4. A VR playback terminal, comprising a processor (210), a memory (202) and a communication bus (209), wherein,
the communication bus (209) is used for realizing connection communication between the processor (210) and the memory (202); and
the processor (210) is used for executing a video transmission program stored in the memory (202), so as to implement steps of the video transmission method according to any of claims 1 to 3.

5. A system, comprising a VR playback terminal according to claim 4 and a server, the server comprising a processor (110), a memory (201) and a communication bus (109), wherein,
the communication bus (109) is used for realizing connection communication between the processor (110) and the memory (201); and
the processor (110) is used for executing a video transmission program stored in the memory (201), so as to implement steps of the video transmission method applied to a server, the method comprising:
predicting (101), according to obtained first position information of a virtual reality VR playback terminal based on a preset position prediction model, that is used to predict a motion trajectory of a head of a user wearing the VR playback terminal, second position information of the VR playback terminal within a set time length; and
sending (102), when a compressed video of a viewing angle that corresponds to the second position information is sent to the VR playback terminal, the compressed video to other video playback terminals when a sharing instruction sent by the VR playback terminal is received, so that the other video playback terminals play back the compressed video;
wherein the method further comprising:
using a third location information of the VR playback terminal, that is different form the first location information and the second location information, as a new first location information, in order to predict a new second location information based on the new first location information and send a compressed video of a viewing angle that corresponds to the new second location information to the VR playback terminal.

6. The system according to claim 5, wherein before sending the compressed video of the viewing angle that corresponds to the second position information to the VR playback terminal, the method further comprises:
acquiring (202) a video of the viewing angle that corresponds to the second position information from a preset video source according to the second position information; and
compressing (203) the video of the viewing angle that corresponds to the second position information according to a transmission rate of a preset wireless transmission network for transmitting the compressed video, so as to obtain the compressed video of the viewing angle that corresponds to the second position information.

7. The system according to claim 6, wherein the video of the viewing angle that corresponds to the second position information comprises:
a VR video of the viewing angle that corresponds to the second position information, and/or an augmented reality AR video of the viewing angle that corresponds to the second position information.

8. The system according to claim 7, wherein before acquiring the video of the viewing angle that corresponds to the second position information from the preset video source according to the second position information, the method further comprises:
superimposing set visual information to the video source when the video of the viewing angle that corresponds to the second position information is the AR video of the viewing angle that corresponds to the second position information.

9. The system according to any of claims 5 to 8, wherein manners for acquiring the first position information include:
receiving the first position information sent by the VR playback terminal in real time; or
acquiring infrared information of the VR playback terminal by means of an infrared camera preset around the VR playback terminal and locating the infrared information so as to obtain the first position information of the VR playback terminal; or
acquiring image information of the VR playback terminal by means of a camera preset around the VR playback terminal and locating the image information so as to obtain the first position information of the VR playback terminal.

10. A computer-readable storage medium, which stores one or more programs therein, wherein the one or more programs may be executed by one or more processors, so as to implement steps of the video transmission method according to any of claims 1 to 3.

## Patentansprüche

1. Videoübertragungsverfahren, das auf ein VR-Wiedergabeendgerät angewendet wird, wobei das Verfahren umfasst:
Wiedergeben (503), wenn ein komprimiertes Video eines Beobachtungswinkels, der zweiten Positionsinformationen entspricht, die von einem Server gesandt werden, empfangen wird, des komprimierten Videos, und Senden, wenn eine Teilungsanweisung, die von einem Benutzer ausgelöst wird, empfangen wird, der Teilungsanweisung an den Server, so dass der Server das komprimierte Video an andere Video-Wiedergabeendgeräte unter Kontrolle der Teilungsanweisung sendet;
worin das Wiedergeben des komprimierten Videos umfasst:
Dekomprimieren, wenn eine GPU im VR-Wiedergabeendgerät angeordnet ist, des komprimierten Videos, um ein zweites dekomprimiertes Video zu erhalten;
Einstellen, gemäß dritten Positionsinformationen des VR-Wiedergabeendgeräts, die gerade erfasst wurden, des zweiten dekomprimierten Videos in ein drittes dekomprimiertes Video eines Beobachtungswinkels, der den dritten Positionsinformationen entspricht, mittels der GPU aufgrund eines vorgegebenen Beobachtungswinkel-Algorithmus; und
Wiedergeben des dritten dekomprimierten Videos.

2. Verfahren nach Anspruch 1, worin vor dem Empfangen des komprimierten Videos des Beobachtungswinkels, der den zweiten Positionsinformationen entspricht, die vom Server gesandt werden, das Verfahren ferner umfasst:
Senden (502) der ersten Positionsinformationen des VR-Wiedergabeendgeräts, die in Echtzeit erfasst werden, an den Server in Echtzeit, so dass der Server die zweiten Positionsinformationen des VR-Endgeräts innerhalb einer festgesetzten Zeitlänge gemäß den ersten Positionsinformationen vorhersagt.

3. Verfahren nach Anspruch 2, worin vor dem Senden der ersten Positionsinformationen des VR-Wiedergabeendgeräts, die in Echtzeit erfasst werden, an den Server in Echtzeit, das Verfahren ferner umfasst:
Erfassen (501) der ersten Positionsinformationen des VR-Wiedergabeendgeräts in Echtzeit gemäß einer Bewegungsbahn des Kopfs des Benutzers, der das VR-Wiedergabeendgerät trägt.

4. VR-Wiedergabeendgerät, umfassend einen Prozessor (210), einen Speicher (202) und einen Kommunikationsbus (209), worin
der Kommunikationsbus (209) benutzt wird, um Verbindungskommunikation zwischen dem Prozessor (210) und dem Speicher (202) herzustellen; und
der Prozessor (210) benutzt wird, um ein Videoübertragungsprogramm auszuführen, das im Speicher (202) gespeichert ist, um Schritte des Videoübertragungsverfahrens nach einem der Ansprüche 1 bis 3 zu implementieren.

5. System, umfassend ein VR-Wiedergabeendgerät nach Anspruch 4 und einen Server, worin der Server einen Prozessor (110), einen Speicher (201) und einen Kommunikationsbus (109) umfasst, worin
der Kommunikationsbus (109) benutzt wird, um Verbindungskommunikation zwischen dem Prozessor (110) und dem Speicher (201) herzustellen; und
der Prozessor (110) benutzt wird, um ein Videoübertragungsprogramm auszuführen, das im Speicher (201) gespeichert ist, um Schritte des Videoübertragungsverfahrens zu implementieren, das auf einen Server angewendet wird, wobei das Verfahren umfasst:
Vorhersagen (101), gemäß erhaltenen ersten Positionsinformationen eines virtuellen Realitäts-VR-Wiedergabeendgeräts aufgrund eines vorgegebenen Positionsvorhersagemodells, das verwendet wird, um eine Bewegungsbahn eines Kopfs eines Benutzers, der das VR-Wiedergabeendgerät trägt, vorherzusagen, von zweiten Positionsinformationen des VR-Wiedergabeendgeräts innerhalb einer festgesetzten Zeitlänge; und
Senden (102), wenn ein komprimiertes Video eines Beobachtungswinkels, der den zweiten Positionsinformationen entspricht, an das VR-Wiedergabeendgerät gesandt wird, des komprimierten Videos an andere Video-Wiedergabeendgeräte, wenn eine Teilungsanweisung, die vom VR-Wiedergabeendgerät gesandt wird, empfangen wird, so dass die anderen Video-Wiedergabeendgeräte das komprimierte Video wiedergeben;
worin das Verfahren ferner umfasst:
Benutzen von dritten Ortsinformationen des VR-Wiedergabeendgeräts, die anders sind als die ersten Ortsinformationen und die zweiten Ortsinformationen, als die neuen ersten Ortsinformationen, um neue zweite Ortsinformationen aufgrund der neuen ersten Ortsinformationen vorherzusagen und ein komprimiertes Video eines Beobachtungswinkels, der den neuen zweiten Ortsinformationen entspricht, an das VR-Wiedergabeendgerät zu senden.

6. System nach Anspruch 5, worin vor dem Senden des komprimierten Videos des Beobachtungswinkels, der den zweiten Positionsinformationen entspricht, an das VR-Wiedergabeendgerät das Verfahren ferner umfasst:
Erfassen (202) eines Videos des Beobachtungswinkels, der den zweiten Positionsinformationen entspricht, aus einer vorgegebenen Videoquelle gemäß den zweiten Positionsinformationen; und
Komprimieren (203) des Videos des Beobachtungswinkels, der den zweiten Positionsinformationen entspricht, gemäß einer Übertragungsrate eines vorgegebenen drahtlosen Übertragungsnetzwerkes zum Übertragen des komprimierten Videos, um das komprimierte Video des Beobachtungswinkels, der den zweiten Positionsinformationen entspricht, zu erhalten.

7. System nach Anspruch 6, worin das Video des Beobachtungswinkels, der den zweiten Positionsinformationen entspricht, umfasst:
ein VR-Video des Beobachtungswinkels, der den zweiten Positionsinformationen entspricht, und/oder ein erweitertes Realitäts-AR-Video des Beobachtungswinkels, der den zweiten Positionsinformationen entspricht.

8. System nach Anspruch 7, worin vor dem Erfassen des Videos des Beobachtungswinkels, der den zweiten Positionsinformationen entspricht, aus der vorgegebenen Videoquelle gemäß den zweiten Positionsinformationen das Verfahren ferner umfasst:
Überlagern von vorgegebenen visuellen Informationen auf die Videoquelle, wenn das Video des Beobachtungswinkels, der den zweiten Positionsinformationen entspricht, das AR-Video des Beobachtungswinkels, der den zweiten Positionsinformationen entspricht, ist.

9. System nach einem der Ansprüche 5 bis 8, worin die Arten und Weisen zum Erfassen der ersten Positionsinformationen umfassen:
Empfangen der ersten Positionsinformationen, die vom VR-Wiedergabeendgerät gesandt werden, in Echtzeit; oder
Erfassen von Infrarotinformationen des VR-Wiedergabeendgeräts mittels einer Infrarotkamera, die um das VR-Wiedergabeendgerät voreingestellt ist, und Verorten der Infrarotinformationen, um die ersten Positionsinformationen des VR-Wiedergabeendgeräts zu erhalten; oder
Erfassen von Bildinformationen des VR-Wiedergabeendgeräts mittels einer Kamera, die um das VR-Wiedergabeendgerät voreingestellt ist, und Verorten der Bildinformationen, um die ersten Positionsinformationen des VR-Wiedergabeendgeräts zu erhalten.

10. Computerlesbares Speichermedium, das eines oder mehrere Programme darin speichert, worin das eine oder die mehreren Programme von einem oder mehreren Prozessoren ausgeführt werden können, um Schritte des Videoübertragungsverfahrens nach einem der Ansprüche 1 bis 3 zu implementieren.

## Revendications

1. Procédé de transmission vidéo, appliqué à un terminal de lecture VR, le procédé comprenant :
la lecture (503), lorsqu'une vidéo compressée d'un angle de visualisation qui correspond à une deuxième information de position envoyée par un serveur est reçue, de la vidéo compressée, et l'envoi, lorsqu'une instruction de partage déclenchée par un utilisateur est reçue, de l'instruction de partage au serveur, de sorte que le serveur envoie la vidéo compressée à d'autres terminaux de lecture vidéo sous la commande de l'instruction de partage ;
dans lequel la lecture de la vidéo compressée comprend :
la décompression, lorsqu'un GPU est agencé dans le terminal de lecture VR, de la vidéo compressée de manière à obtenir une deuxième vidéo décompressée ;
l'ajustement, en fonction d'une troisième information de position du terminal de lecture VR actuellement acquise, de la deuxième vidéo décompressée en une troisième vidéo décompressée d'un angle de visualisation qui correspond à la troisième information de position au moyen du GPU sur la base d'un algorithme d'angle de visualisation prédéfini ; et
la lecture de la troisième vidéo décompressée.

2. Procédé selon la revendication 1, dans lequel avant de recevoir la vidéo compressée de l'angle de visualisation qui correspond à la deuxième information de position envoyée par le serveur, le procédé comprend en outre :
l'envoi (502) d'une première information de position du terminal de lecture VR acquise en temps réel au serveur en temps réel, de sorte que le serveur prédise la deuxième information de position du terminal VR en un laps de temps défini selon la première information de position.

3. Procédé selon la revendication 2, dans lequel avant d'envoyer la première information de position du terminal de lecture VR acquise en temps réel au serveur en temps réel, le procédé comprend en outre :
l'acquisition (501) de la première information de position du terminal de lecture VR en temps réel selon une trajectoire de mouvement de la tête de l'utilisateur portant le terminal de lecture VR.

4. Terminal de lecture VR, comprenant un processeur (210), une mémoire (202) et un bus de communication (209), dans lequel,
le bus de communication (209) est utilisé pour réaliser une communication à connexion entre le processeur (210) et la mémoire (202) ; et
le processeur (210) est utilisé pour exécuter un programme de transmission vidéo stocké dans la mémoire (202), de manière à mettre en oeuvre les étapes du procédé de transmission vidéo selon l'une quelconque des revendications 1 à 3.

5. Système, comprenant un terminal de lecture VR selon la revendication 4 et un serveur, le serveur comprenant un processeur (110), une mémoire (201) et un bus de communication (109), dans lequel,
le bus de communication (109) est utilisé pour réaliser une communication à connexion entre le processeur (110) et la mémoire (201) ; et
le processeur (110) est utilisé pour exécuter un programme de transmission vidéo stocké dans la mémoire (201), de manière à mettre en oeuvre les étapes du procédé de transmission vidéo appliqué à un serveur, le procédé comprenant :
la prédiction (101), en fonction d'une première information de position obtenue d'un terminal de lecture en réalité virtuelle VR sur la base d'un modèle de prédiction de position prédéfini, qui est utilisé pour prédire une trajectoire de mouvement d'une tête d'un utilisateur portant le terminal de lecture VR, d'une deuxième information de position du terminal de lecture VR en un laps de temps défini ; et
l'envoi (102), lorsqu'une vidéo compressée d'un angle de visualisation qui correspond à la deuxième information de position est envoyée au terminal de lecture VR, de la vidéo compressée à d'autres terminaux de lecture vidéo lorsqu'une instruction de partage envoyée par le terminal de lecture VR est reçue, de sorte que les autres terminaux de lecture vidéo lisent la vidéo compressée ;
dans lequel le procédé comprenant en outre :
l'utilisation d'une troisième information de localisation du terminal de lecture VR, qui est différente de la première information de localisation et de la deuxième information de localisation, en tant que nouvelle première information de localisation, afin de prédire une nouvelle deuxième information de localisation sur la base de la nouvelle première information de localisation et d'envoyer une vidéo compressée d'un angle de visualisation qui correspond à la nouvelle deuxième information de localisation au terminal de lecture VR.

6. Système selon la revendication 5, dans lequel avant d'envoyer la vidéo compressée de l'angle de visualisation qui correspond à la deuxième information de position au terminal de lecture VR, le procédé comprend en outre :
l'acquisition (202) d'une vidéo de l'angle de visualisation qui correspond à la deuxième information de position à partir d'une source vidéo prédéfinie selon la deuxième information de position ; et
la compression (203) de la vidéo de l'angle de visualisation qui correspond à la deuxième information de position selon un débit de transmission d'un réseau de transmission sans fil prédéfini pour transmettre la vidéo compressée, de manière à obtenir la vidéo compressée de l'angle de visualisation qui correspond à la deuxième information de position.

7. Système selon la revendication 6, dans lequel la vidéo de l'angle de visualisation qui correspond à la deuxième information de position comprend :
une vidéo VR de l'angle de visualisation qui correspond à la deuxième information de position, et/ou une vidéo en réalité augmentée AR de l'angle de visualisation qui correspond à la deuxième information de position.

8. Système selon la revendication 7, dans lequel avant d'acquérir la vidéo de l'angle de visualisation qui correspond à la deuxième information de position à partir de la source vidéo prédéfinie selon la deuxième information de position, le procédé comprend en outre :
la superposition d'informations visuelles définies à la source vidéo lorsque la vidéo de l'angle de visualisation qui correspond à la deuxième information de position est la vidéo AR de l'angle de visualisation qui correspond à la deuxième information de position.

9. Système selon l'une quelconque des revendications 5 à 8, dans lequel des manières d'acquérir la première information de position incluent :
la réception de la première information de position envoyée par le terminal de lecture VR en temps réel ; ou
l'acquisition d'informations infrarouges du terminal de lecture VR au moyen d'une caméra infrarouge préréglée autour du terminal de lecture VR et la localisation des informations infrarouges de manière à obtenir la première information de position du terminal de lecture VR ; ou
l'acquisition d'informations d'image du terminal de lecture VR au moyen d'une caméra préréglée autour du terminal de lecture VR et la localisation des informations d'image de manière à obtenir la première information de position du terminal de lecture VR.

10. Support de stockage lisible par ordinateur, qui stocke un ou plusieurs programmes dans celui-ci, dans lequel les un ou plusieurs programmes peuvent être exécutés par un ou plusieurs processeurs, de manière à mettre en oeuvre les étapes du procédé de transmission vidéo selon l'une quelconque des revendications 1 à 3.
